(19) Europäisches Patentamt
European Patent Office
Office européen des brevets

(11) EP 0 792 891 B1

## (12) EUROPÄISCHE PATENTSCHRIFT

(45) Veröffentlichungstag und Bekanntmachung des Hinweises auf die Patenterteilung:
**11.08.1999 Patentblatt 1999/32**

(51) Int Cl.⁶: **C08F 36/04**, C08F 236/12, C08F 291/00, C08F 292/00, C08F 2/22

(21) Anmeldenummer: **97102540.8**

(22) Anmeldetag: **17.02.1997**

(54) **Verfahren zur Herstellung von Latices auf Basis von konjugierten Dienen mittels Emulsionspolymerisation**

Process for preparing a latex based on conjugated dienes by emulsion polymerization

Procédé de préparation d'un latex à base de diènes conjugués par polymérisation en emulsion

(84) Benannte Vertragsstaaten:
**BE DE ES FR GB IT NL**

(30) Priorität: **29.02.1996 DE 19607631**

(43) Veröffentlichungstag der Anmeldung:
**03.09.1997 Patentblatt 1997/36**

(73) Patentinhaber: **BAYER AG**
**51368 Leverkusen (DE)**

(72) Erfinder:
- **Vogt, Hans-Günter, Dr.**
  **41540 Dormagen (DE)**
- **Grave, Heinrich, Dr.**
  **51467 Bergisch Gladbach (DE)**
- **Bross, Hermann-Josef**
  **51381 Leverkusen (DE)**
- **Matner, Martin, Dr.**
  **51519 Odenthal (DE)**

(56) Entgegenhaltungen:
- **PATENT ABSTRACTS OF JAPAN vol. 018, no. 639 (C-1282), 6. Dezember 1994 & JP 06 248030 A (TAKEDA CHEM IND LTD), 6. September 1994, & CHEMICAL ABSTRACTS, vol. 122, no. 14, 3. April 1995 Columbus, Ohio, US; abstract no. 161736,**
- **PATENT ABSTRACTS OF JAPAN vol. 014, no. 544 (C-0784), 4. Dezember 1990 & JP 02 232204 A (ASAHI CHEM IND CO LTD), 14. September 1990, & CHEMICAL PATENTS INDEX, DOCUMENTATION ABSTRACTS JOURNAL Week 9043 19. Dezember 1990 Derwent Publications Ltd., London, GB; AN 324552**
- **DATABASE WPI Section Ch, Week 8807 Derwent Publications Ltd., London, GB; Class A18, AN 88-047436 XP002031910 & JP 63 006 194 A (ASAHI CHEM IND CO LTD) , 12. Januar 1988**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Herstellung von Latices auf Basis von konjugierten Dienen mittels Emulsionspolymerisation. Die nach dem erfindungsgemäßen Verfahren hergestellten Latices eignen sich insbesondere zur Herstellung von Tauchartikeln, wie Handschuhe, von Kunstleder, von Beschichtungen, wie Teppichrükkenbeschichtung, Papierbeschichtung und Lederbeschichtung.

Zur Herstellung von Latices durch Emulsionspolymerisation sind aus der Literatur Batch-, semikontinuierliche und kontinuierliche Verfahren bekannt. Unter semikontinuierlichen Verfahren werden sowohl Monomer-Zulauf- als auch Saat/Monomerzulauf-Verfahren verstanden. Bei dem letzteren Verfahren kann die Saat entweder in einer ersten Stufe des Prozesses gebildet werden (interne Saat) oder als separat hergestellte Saat (externe Saat) zur Polymerisation eingesetzt werden.

Batch-Verfahren haben generell den Nachteil, daß beispielsweise geringe Abweichungen der Temperatur oder der Einsatzstoffe von den Sollmengen zu deutlichen Schwankungen der Teilchenzahl führen, was wiederum einen starken Einfluß auf die Polymerisationsgeschwindigkeit hat.

Zulaufverfahren haben gegenüber Batchverfahren Vorteile in der Produktionssicherheit, da während der Polymerisation nur ein Teil der gesamten Menge an Monomeren zugegen ist. Verglichen mit dem Batch-Verfahren resultieren jedoch bei Homo- bzw. Copolymerisaten von konjugierten Dienen stärker vernetzte Polymere, was für bestimmte Anwendungen von Nachteil ist.

Aufgabe der vorliegenden Erfindung ist es daher, ein Verfahren zur Verfügung zu stellen, das die oben geschilderten Nachteile des Batchverfahrens und die oben geschilderten Nachteile des Zulaufverfahrens vermeidet. So sollen nach dem erfindungsgemäßen Verfahren Latices hergestellt werden, die beispielsweise einen geringen Verzweigungs- und/oder Vernetzungsgrad sowie eine hohe Bruchdehnung aufweisen. Darüber hinaus soll das erfindungsgemäße Verfahren eine hohe Reproduzierbarkeit aufweisen und die Bildung von Nebenprodukten (wie z.B. Diels-Alder-Produkte) soll minimiert werden.

Gegenstand der vorliegenden Erfindung ist daher ein Verfahren zur Herstellung von Latices auf Basis von Butadien und/oder Isopren und/oder Chloropren und gegebenenfalls mit diesen copolymerisierbaren Vinylverbindungen mittels Emulsionspolymerisation, dadurch gekennzeichnet, daß man die zu polymerisierenden Monomere zu vorgelegtem Saatlatex mit einer Teilchengröße von 10 bis 80 nm basierend auf den in dem erfindungsgemäßen Verfahren eingesetzten Monomeren oder auf anorganischen Pigmenten, in Gegenwart eines radikal-bildenden Aktivators und eines Emulgators so zudosiert, daß das Verhältnis von Polymerisationsgeschwindigkeit der Monomeren zu Zugabegeschwindigkeit der Monomeren 0,05 bis 0,7:1 beträgt, wobei man die Polymerisation bis zu einem Umsatz der Monomeren von ≥95 % bei Temperaturen von 10 bis 85°C, vorzugsweise von 20 - 80°C, durchführt, die Dosierung des Emulgators so steuert, daß die Endteilchengröße ($TG_L$) des herzustellenden Latex sich aus der nachfolgenden Gleichung ergibt:

$$TG_L = TG_S \times (m_L/D_L)^{1/3}/(m_S/D_S)^{1/3} \, ,$$

mit

$D_L$ =   Dichte der Latexteilchen im herzustellenden Latex
$D_S$ =   Dichte der Teilchen der eingesetzten Saat
$m_L$ =   Masse der Latexteilchen im herzustellenden Latex
$m_S$ =   Masse der Teilchen der eingesetzten Saat
$TG_L$ =   Teilchengröße des herzustellenden Latex
$TG_S$ =   Teilchengröße der eingesetzten Saat

und wobei die Menge an Emulgator 0,1 bis 10 Gew.-%, bezogen auf die Gesamtmenge an eingesetzten Monomeren, beträgt, der Anteil der obengenannten konjugierten Diene bei den Copolymerisaten ≥15 Gew.-%, der Anteil der vinylgruppenhaltigen Comonomeren ≤85 Gew.-% ausmacht und die Menge an vorgelegter Saat 0,01 bis 15 Gew.-%, bezogen auf die Gesamtmenge an eingesetzten Monomeren, beträgt.

Als weitere Monomere, die mit den obengenannten konjugierten Dienen copolymerisiert werden können, sind in das erfindungsgemäße Verfahren vinylgruppenhaltige Verbindungen einsetzbar. Zum Beispiel kommen als vinylgruppenhaltige Verbindungen in Frage: Acrylnitril, Methacrylnitril, Dichlorbutadien, α-Methylstyrol, Styrol, Acrylsäureester, Methacrylsäureester, Vinylcarbonsäuren, wie Methacrylsäure, Acrylsäure, Fumarsäure und Itaconsäure sowie Methacrylamid und/oder Acrylamid.

Weiterhin können als Monomere Vinylverbindungen mit N-Methylolamidgruppen und/oder mit deren Ester- oder Ether-Derivaten eingesetzt werden. Genannt werden: N-Methylolacrylamid, N-Methylolmethacrylamid, N-Methoxymethyl-(meth)acrylamid, N-n-Butoxy-methyl-(meth)acrylamid und/oder N-Acetoxymethyl-(meth)acrylamid.

Weiterhin können als Vinylverbindungen solche mit einer Sulfonsäure- und/oder einer Sulfonatgruppe eingesetzt werden. Genannt seien: Styrolsulfonsäure, Vinylsulfonsäure, Allylsulfonsäure, Methallylsulfonsäure, (Meth)acrylsäure-3-sulfopropylester, 2-Acrylamido-2-methylpropansulfonsäure, die gegebenenfalls in Form ihrer wasserlöslichen Salze eingesetzt werden können, bevorzugt (Meth)acrylsäure-3-sulfopropylester und 2-Acrylamido-2-methylpropansulfonsäure.

Nach dem erfindungsgemäßen Verfahren ist es möglich, sowohl Homopolymerisate auf Basis der genannten konjugierten Diene herzustellen als auch Copolymerisate auf Basis der genannten konjugierten Diene mit den obengenannten zur Copolymerisation fähigen Comonomeren. Der Anteil der konjugierten Diene in den Copolymerisaten liegt dabei üblicherweise bei ≥15 Gew.-%, bevorzugt bei 20 bis 99 Gew.-%. Der Anteil der vinylgruppenhaltigen Comonomeren beträgt üblicherweise ≤85 Gew.-%, bevorzugt 80 bis 1 Gew.-%.

Bei der Copolymerisation richtet sich das Mengenverhältnis der eingesetzten Monomere untereinander nach dem jeweils gewünschten Verwendungszweck der herzustellenden Latices. Das optimale Mengenverhältnis der Monomere untereinander kann leicht durch entsprechende Vorversuche bestimmt werden und z.B. entsprechend der Angaben in EP-A 0 442 370, S.4, Zeilen 13-26, abgeleitet werden.

Das erfindungsgemäße Verfahren eignet sich insbesondere zur Herstellung von Dienpolymerisaten und -Copolymerisaten (I), die in eingebauter Form z.B. folgende Monomerzusammensetzung aufweisen (die angegebenen Gewichtsprozente ergeben sich zu 100):

Ia) 85 - 100 Gew.-%, bevorzugt 90 - 100 Gew.-%, Butadien, Isopren und/oder Chloropren,

Ib) 0 - 10 Gew.-%, bevorzugt 0 - 5 Gew.-%, Vinylcarbonsäuren,

Ic) 0 - 10 Gew.-%, bevorzugt 0 - 5 Gew.-%, Acrylnitril, Methacrylnitril, Styrol, $\alpha$-Methylstyrol, Methacrylsäureester, Acrylsäureester und/oder Vinylverbindungen mit Sulfonat, Sulfonsäure, Amid und/oder N-Methylolamidgruppen;

sowie zur Herstellung von (N)SBR-Latices (II) mit z.B. folgender Zusammensetzung:

IIa) 15 - 99 Gew.-%, bevorzugt 20 - 99 Gew.-%, Butadien und/oder Isopren,

IIb) 1 - 80 Gew.-% bevorzugt 1 - 60 Gew.-%, Acrylnitril, Methacrylnitril, Styrol, $\alpha$-Methylstyrol und/oder Methacrylsäuremethylester,

IIc) 0 - 25 Gew.-% (Meth)acrylsäure-$C_2$-$C_8$-Ester,

IId) 0 - 10 Gew.-% Vinylcarbonsäuren,

IIe) 0 - 15 Gew.-% Vinylverbindungen mit Sulfonat, Sulfonsäure, Amid und/oder N-Methylolamid-Gruppen.

Als Saat eignen sich erfindungsgemäß beispielsweise sowohl Latices auf Grundlage der nach dem erfindungsgemäßen Verfahren herzustellenden Latices als auch Latices, die andere Monomere als die herzustellenden Latices zur Grundlage haben. Beispielsweise kommen in Frage: Latices basierend auf Styrol und/oder Acrylnitril und/oder Methylmethacrylat und/oder Butadien und/oder einer der bereits zuvor genannten Vinylcarbonsäure. Bevorzugt werden als Saatlatices eingesetzt: Homopolymerisatlatices basierend auf Styrol oder Butadien, carboxylierte Copolymerisatlatices basierend auf Styrol oder Methylmethacrylat als Hauptmonomere sowie auf den zuvor erwähnten Vinylcarbonsäuren als Comonomere.

Die Teilchengröße der vorgelegten Saat liegt im Bereich von 10 bis 80 nm, bevorzugt im Bereich 20 bis 50 nm.

Als Saat können für das erfindungsgemäße Verfahren ebenfalls solche anorganischen Pigmente eingesetzt wrden, deren Teilchen als Keime für die weitere Polymerisation wirken können. Beispielsweise sind Pigmente mit einer durchschnittlichen Teilchengröße von 5 bis 100 nm geeignet, wie Kieselsol, deren Verwendung als Saat für die Emulsionspolymerisation in der Literatur beschrieben ist (Hergeth, Starre, Schmutzler, Wartewig, Polymer, 1988, Vol. 29, 1923-8; Furusawa, Kimura, Tagawa, J. Colloid Interface Sci., 1986, 109(1), 69-76).

Nach dem erfindungsgemäßen Verfahren kann die Gesamtmenge der einzusetzenden Saat vorgelegt werden oder auch nur eine entsprechende Teilmenge des insgesamt einzusetzenden Saat. Die restliche Menge der Saat kann dann im Laufe der Polymerisation nachdosiert werden. Bevorzugt wird nach dem erfindungsgemäßen Verfahren die Gesamtmenge der Saat den zu polymerisierenden Monomeren vorgelegt.

Die Menge des einzusetzenden Saat richtet sich nach der Größe des herzustellenden Latex und läßt sich aus der zuvor angegebenen Gleichung (I) bestimmen. Sie beträgt üblicherweise 0,01 bis 15, bevorzugt 0,1 bis 5 Gew.-

%. bezogen auf Gesamtmenge an Monomeren, bei einer Teilchengröße von 10 bis 80 nm.

Für das erfindungsgemäße Verfahren ist es wesentlich, daß das Verhältnis von Polymerisationsgeschwindigkeit der Monomeren zu Zugabegeschwindigkeit der Monomeren kleiner als 0,7:1, bevorzugt 0,05 bis 0,7:1, insbesondere 0,05 bis 0,6:1, beträgt.

Die Polymerisation der eingesetzten Monomere wird nach dem erfindungsgemäßen Verfahren in Gegenwart eines Radikal-bildenden Aktivators, eines Emulgators und in Gegenwart von Wasser durchgeführt. Als Radikal-bildende Aktivatoren können in das erfindungsgemäße Verfahren eingesetzt werden, z.B. anorganische Peroxoverbindungen, wie Wasserstoffperoxid, Natrium-, Kalium- und Ammoniumperoxodisulfat, Peroxocarbonate und Boratperoxidhydrate, ferner organische Peroxoverbindungen, wie Acylhydroperoxide, Diacylperoxide, Alkylhydroperoxide und Dialkylperoxide, sowie Ester, wie tert.-Butylperbenzoat, sowie Kombinationen aus anorganischen und organischen Aktivatoren. Die Aktivatormengen liegen üblicherweise im Bereich von 0,01 bis 5 Gew.-%, bezogen auf die Gesamtmenge der eingesetzten Monomeren, bevorzugt im Bereich 0,05 bis 2,0 Gew.-%.

Die erwähnten anorganischen und organischen Peroxoverbindungen (Aktivatoren) lassen sich auch in Kombination mit einem oder mehreren geeigneten Reduktionsmitteln in bekannter Weise anwenden. Als Beispiele für solche Reduktionsmittel seien genannt: Schwefeldioxid, Alkalidisulfite, Alkali- und Ammoniumhydrogensulfite, -thiosulfat, -dithionit und -formaldehydsulfoxylate, ferner Hydroxylaminhydrochlorid, Hydrazinsulfat, Eisen(II)-sulfat, Glucose und Ascorbinsäure. Die Menge an Reduktionsmittel beträgt 0,01 bis 1,0 Gew.-%, bezogen auf den Gesamtmonomeranteil.

Durch entsprechende Vorversuche läßt sich der am besten geeignete Aktivator bestimmen. Dieser richtet sich insbesondere nach der Art der eingesetzten Monomeren und nach der Reaktionstemperatur der Polymerisation.

Häufig empfiehlt es sich, die Emulsionspolymerisation noch in Gegenwart von Puffersubstanzen sowie von Chelierungsmitteln durchzuführen. Beispielsweise sind hierfür geeignet: Alkaliphosphate und -pyrophosphate (Puffersubstanzen) sowie als Chelierungsmittel die Alkalisalze der Ethylendiamintetraessigsäure (EDTA).

Die Menge an Puffersubstanzen und Chelierungsmittel beträgt üblicherweise 0,01 bis 1 Gew.-%, bezogen auf Gesamtmenge an Monomeren.

Weiterhin werden zur Emulsionspolymerisation häufig noch Kettenübertragungsmittel (Regler) eingesetzt. Gebräuchlich sind z.B. organische Schwefelverbindungen, wie $C_1$-$C_{15}$-Alkylmercaptane, bevorzugt sind n-, i- und t-Dodecylmercaptan. Die Menge des Kettenübertragungsmittels beträgt üblicherweise 0,05 bis 3 Gew.-%, vorzugsweise 0,2 bis 2,0 Gew.-%, bezogen auf das Gesamtgewicht der eingesetzten Monomeren.

Für die erfindungsgemäße Emulsionspolymerisation ist es ebenfalls von Bedeutung, daß die Dosierung des erforderlichen Stabilisators und/oder des Emulgators so gesteuert wird, daß die Endteilchengröße des fertigen Latex sich aus der oben angeführten Gleichung ergibt. Die Emulgatoren sind bekannt und werden in üblicher Weise bei der Emulsionspolymerisation verwendet (D.C. Blackley, Emulsion Polymerisation, Chapter 7, Applied Science Publishers LTD, London, 1975).

Als erfindungsgemäß einzusetzende Emulgatoren werden insbesondere genannt: Sogenannte anionogene Emulgatoren, wie höhere Fettalkoholsulfate, höhere Alkylsulfonate, Alkylarylsulfonate, Arylsulfonate sowie deren Kondensationsprodukte mit Formaldehyd, Salze der Sulfobernsteinsäureester und sulfatierter Ethylenoxidaddukte.

Als weiterhin sogenannte nichtionogene Emulgatoren, wie z.B. die bekannten Umsetzungsprodukte des Ethylenoxids mit Fettalkoholen, wie Lauryl-, Myristyl-, Cetyl-, Stearyl- und Oleylalkohol, mit Fettsäuren, wie Laurin-, Myristin-, Palmitin-, Stearin- und Ölsäure, sowie deren Amide, und mit Alkylphenolen, wie Isoctyl-, Isononyl- und Dodecylphenol.

Für die Polymerisation im alkalischen pH-Bereich eignen sich insbesondere die Salze der Fettsäuren und Harzsäuren.

Die genannten Emulgatoren werden im allgemeinen in Mengen von 0,1 bis 10 Gew.-%, insbesondere 0,2 bis 8 Gew.-%, bezogen auf die Gesamtmenge der eingesetzten Monomeren, verwendet.

Die Gesamtmenge des einzusetzenden Emulgators ist so bemessen, daß der Latex während der Polymerisation in der Weise stabilisiert wird, daß kein Koagulat gebildet wird. Andererseits darf der Emulgator nicht in zu großer Menge und auch nicht in einem zu frühen Stadium zugegeben werden, da sonst neue Latexteilchen gebildet werden, was einen unkontrollierten Anstieg der Polymerisationsgeschwindigkeit zu Folge hat. Durch Kontrollieren der gemäß Gleichung (I) aus der eingesetzten Menge und Teilchengröße der Saat berechneten Endteilchengröße kann leicht überprüft werden, ob die Dosierung des Emulgators in der Weise erfolgte, daß weder neue Latexteilchen gebildet wurden, noch Agglomeration ursprünglich vorhandener Teilchen stattfand.

Die einzusetzende Menge an Wasser bei der Emulsionspolymerisation wird üblicherweise so bemessen, daß eine Feststoff-Konzentration des Latex in Wasser von 40 bis 55 Gew.-% resultiert.

Das erfindungsgemäße Verfahren eignet sich insbesondere für die Herstellung von Acrylnitril-Butadien-Copolymerisat-Latices. Für die Herstellung der Acrylnitril-Butadien-Copolymerisat-Latices werden bevorzugt als Monomere 15 bis 60 Gew.-% Acrylnitril und/oder Methacrylnitril, 39 bis 84 Gew.-% Butadien, 0 bis 10 Gew.-% einer der genannten Vinylcarbonsäure sowie 0 bis 25 Gew.-% eines Acrylsäure- und/oder Methacrylsäureesters und/oder Styrol und 0 bis 15 Gew.-% einer Vinylverbindung mit einer Sulfonat-, Amid-, N-Methylolamid und/oder veretherten und/oder

ver:esterten N-Methylolamidgruppe eingesetzt.

Die Herstellung der Acrylnitril-Butadien-Copolymerisat-Latices wird dabei in Gegenwart eines Redoxaktivators auf Basis von Peroxoverbindungen mit geeigneten Reduktionsmitteln durchgeführt. Besonders geeignet sind hierfür Redoxaktivatoren auf der Basis von Hydroperoxiden, wie Cumolhydroperoxid, Diisopropylbenzolhydroperoxid oder t-Butyl-hydroperoxid in Kombination mit Alkali-Formaldehydsulfoxylat oder Alkalidisulfit als Reduktionsmittel. Vorzugsweise wird die Polymerisation in Gegenwart geringer Mengen (0,0001 bis 0,1 Gew.-%, bezogen auf Gesamtmenge an eingesetzten Monomeren) Fe-II-Salze, gegebenenfalls unter Zusatz (bis zu 0,5 Gew.-%) eines Komplexbildners, wie z.B. EDTA, durchgeführt.

Für die Herstellung der Acrylnitril-Butadien-Copolymerisat-Latices hat es sich als vorteilhaft erwiesen, die Polymerisation zunächst bis zu einem Umsatz der Monomeren von bis zu 60 %, bevorzugt bis zu 70 %, bei Temperaturen von 10 bis 60°C, durchzuführen und anschließend bei einer um 10 bis 20°C höheren (bezogen auf die im 1. Abschnitt gewählte Temperatur) Temperatur (bis maximal 80°C) bis zu einem Umsatz von ≥95 %, bevorzugt ≥98 % zu Ende zu führen. Zur Polymerisation werden ein oder mehrere Emulgatoren in der Weise zugegeben, daß die wachsenden Latexteilchen stabil gehalten werden und sich die Endteilchengröße aus der Gleichung (I) ergibt. Vorzugsweise werden gemäß dem erfindungsgemäßen Verfahren Acrylnitril-Butadien-Copolymerisat-Latices mit Teilchengrößen im Bereich 80 bis 200 nm hergestellt. Die Gesamtmenge an einzusetzenden Emulgatoren wird so gewählt, daß während der Polymerisation kein Koagulat gebildet wird. Je nach gewünschter Teilchengröße sind hierfür erfahrungsgemäß 1 bis 8 Gew.-% Emulgatoren, bezogen auf die Gesamtmenge an eingesetzten Monomeren, erforderlich.

Das erfindungsgemäße Verfahren besitzt folgenden Vorteil: Es stellt eine nahezu koagulatfreie Polymerisation dar mit hervorragender Reproduzierbarkeit der Teilchengröße und der Polymerisationsgeschwindigkeit auch bei kritischen Monomerzusammensetzungen, deren Polymerisation nach herkömmlichem Stand der Technik nur schlecht beherrschbar und schlecht reproduzierbar ist. Hierzu gehört z.B. die Polymerisation von Acrylnitril-Butadien-Copolymerisat-Latices mit einem Acrylnitrilgehalt >40 Gew.-%.

Von den Anwendungseigenschaften der Latices sind folgende Vorteile gegenüber den herkömmlichen Verfahren hervorzuheben:
hohe Bruchdehnungen, hohe Zugfestigkeiten sowie gute Abriebeigenschaften der daraus hergestellten, getrockneten Polymerisationsfilme, sowohl im unvernetzten als auch, falls für die Anwendung gewünscht, im vulkanisierten Zustand. Weiterhin zeichnen sich die erfindungsgemäß hergestellten Latices gegenüber im Batchverfahren mit konjugierten Dienen hergestellten Latices durch einen geringeren Gehalt an unerwünschten Diels-Alder-Nebenprodukten aus.

Die nach dem erfindungsgemäßen Verfahren hergestellten Latices auf Basis von konjugierten Dienen finden insbesondere Verwendung bei der Herstellung von Tauchartikeln und Kunstlederbasismaterialien bei der Bindung von Fasern aller Art sowie bei der Beschichtung von Papier, Leder, Textilien, Vliesstoffen oder Teppichrücken.

Die in den Beispielen angegebenen Teilchengrößen wurden durch Laserkorrelationsspektroskopie bestimmt. Für den Saatlatex wurde zusätzlich mit der Ultrazentrifuge eine Teilchengrößenverteilung aufgenommen und das Zahlenmittel der Teilchengröße (TGs) zu 37 nm bestimmt. Die Dichte der Teilchen der eingesetzten Saat beim Saatlatex betrug in allen Beispielen 1,06 g/cm

Bei den angegebenen Beispielen wurden während der Polymerisation Proben gezogen und aus dem durch Eindampfen bestimmten Feststoff der jeweilige Umsatz der Polymerisation berechnet. Aus dem zum Zeitpunkt der vollständigen Dosierung der Monomeren bestimmten Umsatz wurde das Verhältnis von Polymerisations- zu Zugabegeschwindigkeit (V $_{(Polym.)}$ : V $_{(Zugabe)}$) ermittelt.

## Beispiele

### Beispiel 1

40 g eines 30 %igen Saatlatex (Teilchengröße 37 nm) werden in einem mit Stickstoff gespülten Autoklaven mit 302 g Wasser auf 80°C geheizt und hierzu eine Monomer/Reglermischung bestehend aus 368 g Styrol, 600 g Butadien, 20 g Acrylsäure sowie 10 g t-DDM (tertiäres Dodecylmercaptan) innerhalb von 2 h zudosiert. Parallel dazu wird ein Emulgatorzulauf bestehend aus 8 g Na-Dodecylbenzolsulfonat, 1 g Ätznatron, 1 g Ammoniumpersulfat, sowie 450 g Wasser innerhalb von 2 h zudosiert. Nach 2 h wird ein 8 stündiger Aktivatorzulauf bestehend aus 3 g Ammoniumpersulfat und 60 g Wasser gestartet. Während der gesamten Polymerisation betrug die Temperatur 80°C. Nach einer Gesamtpolymerisationszeit von 15 h betrug die durch Eindampfen bestimmte Konzentration 54,4 %, entsprechend einem Umsatz von 98,9 %.

Das Verhältnis zwischen Polymerisationsgeschwindigkeit und Zugabegeschwindigkeit der Monomeren betrug 0,25 : 1. Die Teilchengröße wurde zu 163 nm bestimmt (berechnet 167 nm).

**Vergleichsbeispiel 1**

40 g eines 30 %igen Saatlatex (Teilchengröße 37 nm) werden in einem mit Stickstoff gespülten Autoklaven mit 302 g Wasser auf 80°C geheizt und hierzu eine Monomer/Reglermischung bestehend aus 368 g Styrol, 600 g Butadien, 20 g Acrylsäure sowie 10 g t-DDM innerhalb von 12 h zudosiert. Parallel dazu wird ein Emulgatorzulauf bestehend aus 8 g Na-Dodecylbenzolsulfonat, 1 g Ätznatron, 1 g Ammoniumpersulfat, sowie 510 g Wasser innerhalb von 12 h zudosiert. Während der gesamten Polymerisation betrug die Temperatur 80°C. Nach einer Gesamtpolymerisationszeit von 18 h betrug die durch Eindampfen bestimmte Konzentration 54,6 %, entsprechend einem Umsatz von 99,2 %.

Das Verhältnis zwischen Polymerisationsgeschwindigkeit und Zugabegeschwindigkeit der Monomeren betrug 0,80 : 1. Die Teilchengröße wurde zu 169 nm bestimmt (berechnet 167 nm).

Eigenschaften der aus den Latices hergestellten Filme:

|  | Beispiel 1 | Vergleichsbeispiel 1 |
|---|---|---|
| Zugfestigkeit[1]) [MPa] | 1,8 | nicht bestimmbar, da der Film stark rissig war. |
| Bruchdehnung[1]) [%] | 425 | |

[1]) nach DIN 53 504

**Beispiel 2**

67 g eines 30 %igen Saatlatex (Teilchengröße 37 nm) werden in einem mit Stickstoff gespülten Autoklaven mit 853 g Wasser, 0,5 g Tetranatriumethylendiamintetraacetat (Na$_4$EDTA), 0,05 g Na-Formaldehydsulfoxylat, sowie 0,05 g Eisen-II-sulfat aus 40°C geheizt, 1,0 g t-Butylhydroperoxid hinzugegeben und eine Monomer-/Reglermischung bestehend aus 450 g Acrylnitril, 480 g Butadien, 40 g Methacrylsäure sowie 5 g t-DDM innerhalb von 3 h zudosiert. Parallel hierzu wird das Emulgator-/Aktivatorgemisch bestehend aus 30 g Natriumlaurylsulfat, 0,5 g Na-Formaldehydsulfoxylat sowie 280 g Wasser innerhalb von 5 h zudosiert. Nach einer Gesamtpolymerisationszeit von 15 h bei 40°C betrug die durch Eindampfen bestimmte Konzentration 46,3 %, entsprechend einem Umsatz von 99,4 %.

Das Verhältnis zwischen Polymerisationsgeschwindigkeit und Zugabegeschwindigkeit der Monomeren betrug 0,22 : 1. Die Teilchengröße wurde zu 134 nm bestimmt (berechnet 138 nm).

**Vergleichsbeispiel 2a**

67 g eines 30 %igen Saatlatex (Teilchengröße 37 nm) werden in einem mit Stickstoff gespülten Autoklaven mit 853 g Wasser, 0,5 g Na$_4$EDTA, 0,05 g Na-Formaldehydsulfoxylat, sowie 0,05 g Eisen-II-sulfat auf 40°C geheizt, 1,0 g t-Butylhydroperoxid hinzugegeben und eine Monomer-/Reglermischung bestehend aus 450 g Acrylnitril, 480 g Butadien, 40 g Methacrylsäure sowie 5 g t-DDM innerhalb von 12 h zudosiert. Parallel hierzu wird ein Emulgator-/Aktivatorgemisch bestehend aus 30 g Natriumlaurylsulfat, 0,5 g Na-Formaldehydsulfoxylat sowie 280 g Wasser innerhalb von 12 h zudosiert. Nach einer Gesamtpolymerisationszeit von 15 h bei 40°C betrug die durch Eindampfen bestimmte Konzentration 46,1 %, entsprechend einem Umsatz von 98,9 %.

Das Verhältnis zwischen Polymerisationsgeschwindigkeit und Zugabegeschwindigkeit der Monomeren betrug 0,81: 1. Die Teilchengröße wurde zu 145 nm bestimmt (berechnet 138 nm).

**Vergleichsbeispiel 2b und 2c**

In einem mit Stickstoff gespülten Autoklaven werden 950 g Wasser, 7,5 g Natriumlaurylsulfat, 0,5 g Na$_4$EDTA zusammen mit einer Monomer-/Reglermischung bestehend aus 450 g Acrylnitril, 510 g Butadien, 40 g Methacrylsäure sowie 5 g t-DDM auf 40°C geheizt. Es wird mit einer Lösung von 0,05 g Na-Formaldehydsulfoxylat, 0,05 g Eisen-II-sulfat in 50 g Wasser sowie durch Zugabe vom 1,0 g t-Butylhydroperoxid aktiviert und bei 40°C polymerisiert. Bei einem durch Eindampfprobe ermittelten Feststoffgehalt von 15 % sowie von 30 % wird jeweils eine Lösung von 11,25 g Natriumlaurylsulfat, 0,125 g Na-Formaldehydsulfoxylat in 90 g Wasser zugegeben.

Bei der Polymerisation von Vergleichsbeispiel 2b trat zu Beginn eine 3-stündige Inhibierungszeit auf, nach 23 h betrug der Umsatz 99 % und die Teilchengröße 129 nm. Bei Vergleichsbeispiel 2c sprang die Polymerisation sofort an und erreichte bereits nach 12 h 99,5 % Umsatz, die Teilchengröße betrug nur 100 nm.

**Vergleich der Polymereigenschaften von Beispiel 2 mit den Vergleichsbeispielen 2a, 2b und 2 c:**

| | Beispiel | Vergleichsbeispiele | | |
|---|---|---|---|---|
| | 2 | 2a | 2b | 2c |
| $V_{(Polym.)} : V_{(Zugabe)}$ | 0,20:1 | 0,81: 1 | Batch | Batch |
| Teilchengröße [nm] | 134 | 145 | 129 | 100 |
| 4-Cyanocyclohexen [ppm] | 800 | 650 | 2750 | |
| Defo-Härte [N] | 96 | 90 | 84 | 71 |
| Eigenschaften der vulkanisierten Filme [1]: | | | | |
| Zugfestigkeit[2] [MPa] | 20,8 | 11,4 | 20,1 | 19,0 |
| Bruchdehnung[2] [%] | 301 | 191 | 324 | 339 |
| Weiterreißfestigkeit[3] [N/mm) | 52 | 41 | 47 | 43 |

[1] 16,0 Gew.-% Vulkanisationspaste (1,5 Gew.-% Zinkoxid; 1,5 Gew.-% Schwefel; 0,6 Gew.-% Zink-N-diethyldithiocarbamat; 0,4 Gew.-% Zink-mercaptobenzothiazol; 0,4 Gew.-% Zink-N-pentamethylendithiocarbamat; 2,0 Gew.-% Titandioxid; 0,48 Gew.-% Na-Salz eines Naphthalinsulfonsäure-Kondensationsproduktes; 9,12 Gew.-% Wasser) auf 100 Gew.-% Latextrockensubstanz. Vulkanisation 30 min in Heißluft von 105°C.

[2] nach DIN 53 504

[3] nach ASTM D 624

In Beispiel 2 ist die erfindungsgemäße Herstellung eines Acrylnitril-Butadien-Copolymerisat-Latex mit 45 Gew.-% Acrylnitril beschrieben und mit einem Zulaufverfahren gemäß dem Stand der Technik (Vergleichsbeispiel 2a) sowie einem herkömmlichen Batchverfahren (Vergleichsbeispiel 2b, c) verglichen werden. Als Maß für die plastische Verformbarkeit der Latices wurden die Defo-Härte für diese Latices bestimmt. Trotz annähernd gleicher Defo-Werte sind die Zugfestigkeit, die Bruchdehnung sowie die Weiterreißfestigkeit der vulkanisierten Filme des Polymerisats aus Beispiel 2 dem Vergleichsbeispiel 2 a überlegen. Gegenüber dem Vergleichsbeispiel 2b wird das gleiche Wertenniveau erreicht, jedoch werden die Nachteile der schlechten Reproduzierbarkeit im Polymerisationsverlauf und in der Teilchengröße des Endlatex des Vergleichsbeispiels 2b, c vermieden.

**Beispiel 3**

In Beispiel 3 und den Vergleichsbeispielen 3a und 3b wurde gegenüber den Beispielen 2, 2a bzw. 2b die zur Polymerisation eingesetzte Reglermenge von 0,5 auf 1,0 Gew.-%, bezogen auf die eingesetzten Monomeren, erhöht.
67 g eines 30 %igen Saatlatex (Teilchengröße 37 nm) werden in einem mit Stickstoff gespülten Autoklaven mit 853 g Wasser, 0,5 g Na$_4$EDTA, 0,05 g Na-Formaldehydsulfoxylat, sowie 0,05 g Eisen-II-sulfat auf 40°C geheizt, 1,0 g t-Butylhydroperoxid hinzugegeben und eine Monomer-/Reglermischung bestehend aus 450 g Acrylnitril, 480 g Butadien, 40 g Methacrylsäure sowie 10 g t-DDM innerhalb von 3 h zudosiert. Parallel hierzu wird ein Emulgator-/Aktivatorgemisch bestehend aus 30 g Natriumlaurylsulfat, 0,5 g Na-Formaldehydsulfoxylat sowie 280 g Wasser innerhalb von 5 h zudosiert. Nach einer Gesamtpolymerisationszeit von 15 h bei 40°C betrug die durch Eindampfen bestimmte Konzentration 46,4 %, entsprechend einem Umsatz von 99,4 %.
Das Verhältnis zwischen Polymerisationsgeschwindigkeit und Zugabegeschwindigkeit der Monomeren betrug 0,20:1. Die Teilchengröße wurde zu 136 nm bestimmt (berechnet 138 nm).

**Vergleichsbeispiel 3a**

67 g eines 30 %igen Saatlatex (Teilchengröße 37 nm) werden in einem mit Stickstoff gespülten Autoklaven mit 853 g Wasser, 0,5 g Na$_4$EDTA, 0,05 g Na-Formaldehydsulfoxylat, sowie 0,05 g Eisen-II-sulfat aus 40°C geheizt, 1,0 g t-Butylhydroperoxid hinzugegeben und eine Monomer-/Reglermischung bestehend aus 450 g Acrylnitril, 480 g Butadien, 40 g Methacrylsäure sowie 10 g t-DDM innerhalb von 12 h zudosiert. Parallel hierzu wird ein Emulgator-/Aktivatorgemisch bestehend aus 30 g Natriumlaurylsulfat, 0,5 g Na-Formaldehydsulfoxylat sowie 280 g Wasser innerhalb von 12 h zudosiert. Nach einer Gesamtpolymerisationszeit von 15 h bei 40°C betrug die durch Eindampfen bestimmte Konzentration 46,0 %, entsprechend einem Umsatz von 98,2 %.

Das Verhältnis zwischen Polymerisationsgeschwindigkeit und Zugabegeschwindigkeit der Monomeren betrug 0,81:1. Die Teilchengröße wurde zu 138 nm bestimmt (berechnet 138 nm).

**Vergleichsbeispiel 3b**

In einem mit Stickstoff gespülten Autoklaven werden 950 g Wasser, 7,5 g Natriumlaurylsulfat, 0,5 g $Na_4$EDTA zusammen mit einer Monomer-/Reglermischung bestehend aus 450 g Acrylnitril, 510 g Butadien, 40 g Methacrylsäure sowie 10 g t-DDM auf 40°C geheizt. Es wird mit einer Lösung von 0,05 g Na-Formaldehydsulfoxylat, 0,05 g Eisen-II-sulfat in 50 g Wasser sowie durch Zugabe von 1,0 g t-Butylhydroperoxid aktiviert und bei 40°C polymerisiert. Bei einem durch Eindampfprobe ermittelten Feststoffgehalt von 15 % sowie von 30 % wird jeweils eine Lösung von 11,25 g Natriumlaurylsulfat, 0,125 g Na-Formaldehydsulfoxylat in 90 g Wasser zugegeben.

In dem Umsatzbereich zwischen 50 und 70 % war die Polymerisation nicht beherrschbar, so daß ein unkontrollierter Temperaturanstieg von 40°C auf 55°C beobachtet wurde. Die Polymerisation war bereits nach 7 h beendet. Die Konzentration des Latex betrug 46,7 %, entsprechend einem Umsatz von 99,5 %. Die Teilchengröße betrug nur 86 nm.

**Vergleich der Polymereigenschaften von Beispiel 3 mit den Vergleichsbeispielen 3a, 3b und 3c**

| | Beispiel | Vergleichsbeispiele | |
| --- | --- | --- | --- |
| | 3 | 3a | 3b |
| $V_{(Polym.)}$ : $V_{(Zugabe)}$ | 0,20:1 | 0,81: 1 | Batch |
| Teilchengröße [nm] | 138 | 138 | 86 |
| Defo-Härte [N] | 41 | 64 | 55 |
| Eigenschaften der unvernetzten Filme | | | |
| Zugfestigkeit[1] [MPa] | 8,1 | 7,6 | 6,5 |
| Bruchdehnung [1] [%] | 950 | 609 | 587 |
| Eigenschaften der vulkanisierten Filme[3]: | | | |
| Zugfestigkeit[1] [MPa] | 21,8 | 17,2 | 18,5 |
| Bruchdehnung[1] [%] | 454 | 330 | 300 |
| Weiterreißfestigkeit[2] [N/mm) | 38 | 45 | 41 |

[1] nach DIN 53 504

[2] nach ASTM D 624

[3] 16 Gew.-% Vulkanisationspaste (1,5 Gew.-% Zinkoxid; 1,5 Gew.-% Schwefel; 0,6 Gew.-% Zink-N-diethyldithiocarbamat, 0,4 Gew.-% Zink-mercaptobenzothiazol; 0,4 Gew.-% Zink-N-pentamethylendithiocarbamat; 2,0 Gew.-% Titandioxid; 0,48 Gew.-% Na-Salz eines Naphthalinsulfonsäure-Kondensationsproduktes; 9,12 Gew.-% Wasser) auf 100 Gew.-% Latextrockensubstanz. Vulkanisation 30 min in Heißluft von 105°C.

Das nach Batchverfahren durchgeführte Vergleichsbeispiel 3b zeigt, daß die Polymerisation bei diesem Verfahren nicht beherrschbar ist. Durch Vergleich von Beispiel 3 mit den Vergleichsbeispielen 3a und 3b ist zu erkennen, daß bei erfindungsgemäßer Monomerdosierung Vorteile in den Eigenschaften der Polymerfilme sowohl im unvernetzten als auch im vulkanisierten Zustand erzielt wurden.

**Patentansprüche**

1. Verfahren zur Herstellung von Latices auf Basis von Butadien und/oder Isopren und/oder Chloropren und gegebenenfalls mit diesen copolymerisierbaren Vinylverbindungen mittels Emulsionspolymerisation, dadurch gekennzeichnet, daß man die zu polymerisierenden Monomere zu vorgelegtem Saatlatex mit einer Teilchengröße von 10 bis 80 nm basierend auf den in dem erfindungsgemäßen Verfahren eingesetzten Monomeren oder auf anorganischen Pigmenten, in Gegenwart eines radikal-bildenden Aktivators und eines Emulgators so zudosiert, daß das Verhältnis von Polymerisationsgeschwindigkeit der Monomeren zu Zugabegeschwindigkeit der Monomeren 0,05 bis 0,7:1 beträgt, wobei man die Polymerisation bis zu einem Umsatz der Monomeren von ≥95 % bei Temperaturen von 10 bis 85°C durchführt, die Dosierung des Emulgators so steuert, daß die Endteilchengröße (TG$_L$) des herzustellenden Latex sich aus der nachfolgenden Gleichung ergibt:

$$TG_L = TG_S \times (m_L/D_L)^{1/3}/(m_S/D_S)^{1/3} \, ,$$

mit

D$_L$ = Dichte der Latexteilchen im herzustellenden Latex
D$_S$ = Dichte der Teilchen der eingesetzten Saat
m$_L$ = Masse der Latexteilchen im herzustellenden Latex
m$_S$ = Masse der Teilchen der eingesetzten Saat
TG$_L$ = Teilchengröße des herzustellenden Latex
TG$_S$ = Teilchengröße der eingesetzten Saat

und wobei die Menge an Emulgator 0,1 bis 10 Gew.-%, bezogen auf die Gesamtmenge an eingesetzten Monomeren, beträgt, der Anteil der obengenannten konjugierten Diene bei den Copolymerisaten ≥15 Gew.-%, der Anteil der vinylgruppenhaltigen Comonomeren ≤85 Gew.-% ausmacht und die Menge an vorgelegter Saat 0,01 bis 15 Gew.-%, bezogen auf die Gesamtmenge an eingesetzten Monomeren, beträgt.

2. Verfahren nach Anspruch 1, dadurch gekennzeichnet, daß die Polymerisation bei Temperaturen von 20 bis 80°C durchgeführt wird.

3. Verfahren nach Anspruch 1 und 2, dadurch gekennzeichnet, daß die Polymerisation bis zu einem Umsatz von ≥98 % durchgeführt wird.

## Claims

1. A process for the preparation of latices based on butadiene and/or isoprene and/or chloroprene and optionally vinyl compounds which can be copolymerised with the latter by emulsion polymerisation,
characterised in that the monomers to be polymerised are added to a charge of seed latex with a particle size of 10 to 80 nm based on the monomers used in the process according to the invention or based on inorganic pigments, in the presence of a radical-forming activator and an emulsifier such that the ratio of rate of polymerisation of the monomers to rate of addition of the monomers is 0.05 to 0.7:1, wherein polymerisation is carried out at temperatures from 10 to 85 °C until a conversion of the monomers of ≥95%, the metering of the emulsifier is controlled such that the final particle size (TG$_L$) of the latex to be prepared is obtained from the equation below:

$$TG_L = TG_S \times (m_L/D_L)^{1/3}/ (m_S/D_S)^{1/3},$$

where

D$_L$ = density of the latex particles in the latex to be prepared
D$_S$ = density of the particles of the seed used
m$_L$ = mass of the latex particles in the latex to be prepared
m$_S$ = mass of the particles of the seed used
TG$_L$ = particle size of the latex to be prepared
TG$_S$ = particle size of the seed used

and wherein the quantity of emulsifier is 0.1 to 10 wt.%, based on the total quantity of monomers used, the proportion of the above-mentioned conjugated dienes in the copolymers is ≥15 wt.%, the proportion of the comonomers containing vinyl groups is ≤85 wt.%, and the quantity of seed charged is 0.01 to 15 wt.%, based on the total quantity of monomers used.

2. A process according to claim 1, characterised in that polymerisation is carried out at temperatures from 20 to 80 °C.

3. A process according to claim 1 and 2, characterised in that polymerisation is carried out until a conversion of ≥98%.

**Revendications**

1. Procédé pour préparer des latex à base de butadiène et/ou d'isoprène et/ou de chloroprène et le cas échéant de dérivés vinyliques copolymérisables avec ceux-ci par polymérisation en émulsion, caractérisé en ce que l'on ajoute les monomères à polymériser à un latex d'ensemencement à une dimension de particule de 10 à 80 nm, à base des monomères mis en oeuvre dans le procédé selon l'invention ou à des pigments minéraux, en présence d'un activateur radicalaire et d'un agent émulsionnant, dans des conditions telles que le rapport entre la vitesse de polymérisation des monomères et la vitesse d'addition des monomères va de 0,05 à 0,7:1, on procède à la polymérisation jusqu'à un taux de conversion des monomères supérieur ou égal à 95 % à des températures de 10 à 85°C, on règle le dosage de l'agent émulsionnant en sorte que la dimension de particule finale ($TG_L$) du latex en cours de préparation résulte de l'équation suivante :

$$TG_L = TG_S \times (m_L/D_L)^{1/3}(m_S/D_S)^{1/3},$$

dans laquelle

$D_L$ = densité des particules du latex à préparer
$D_S$ = densité des particules du latex d'ensemencement
$m_L$ = masse des particules du latex à préparer
$m_S$ = masse des particules des germes d'ensemencement
$TG_L$ = dimension de particule du latex à préparer
$TG_S$ = dimension de particule des germes d'ensemencement,

la quantité d'agent émulsionnant représentant de 0,1 à 10 % du poids total des monomères mis en oeuvre, la proportion des diènes conjugués mentionnés ci-dessus, dans le cas de copolymères, est supérieure ou égale à 15 % en poids, la proportion des comonomères à groupes vinyle représente 85 % en poids ou moins et la quantité des germes mise en oeuvre au début représente de 0,01 à 15 % du poids des monomères totaux mis en oeuvre.

2. Procédé selon la revendication 1, caractérisé en ce que la polymérisation est réalisée à des températures de 20 à 80°C.

3. Procédé selon les revendications 1 et 2, caractérisé en ce que la polymérisation est poursuivie jusqu'à un taux de conversion supérieur ou égal à 98 %.